**Europäisches Patentamt**

**European Patent Office**

**Office européen des brevets**

(19)

(11) Veröffentlichungsnummer : **0 331 779 B1**

(12) **EUROPÄISCHE PATENTSCHRIFT**

(45) Veröffentlichungstag der Patentschrift :
17.04.91 Patentblatt 91/16

(51) Int. Cl.⁵ : **B60J 3/02**

(21) Anmeldenummer : **88103694.1**

(22) Anmeldetag : **09.03.88**

(54) **Sonnenblende für Kraftfahrzeuge.**

(43) Veröffentlichungstag der Anmeldung :
**13.09.89 Patentblatt 89/37**

(45) Bekanntmachung des Hinweises auf die
Patenterteilung :
**17.04.91 Patentblatt 91/16**

(84) Benannte Vertragsstaaten :
**DE ES FR GB SE**

(56) Entgegenhaltungen :
**EP-A- 0 230 778**
**DE-A- 3 324 169**

(73) Patentinhaber : **Zipperle, Michael**
**Mühlstrasse 8**
**W-7140 Ludwigsburg (DE)**

(72) Erfinder : **Zipperle, Michael**
**Mühlstrasse 8**
**W-7140 Ludwigsburg (DE)**

(74) Vertreter : **Patentanwälte Phys. Bartels**
**Dipl.-Ing. Fink Dr.-Ing. Held**
**Lange Strasse 51**
**W-7000 Stuttgart 1 (DE)**

## Beschreibung

Die Erfindung betrifft eine Sonnenblende für Kraftfahrzeuge mit einem Spiegel und einem zu dessen Abdeckung vorgesehenen Schieber aus Kunststoff, der im Bereich seiner beiden in der Verschieberichtung verlaufenden Randzonen in je einer Führungsschiene eines aus Kunststoff bestehenden Halters geführt ist.

Bei den bekannten Sonnenblenden dieser Art (Siehe z.B. die DE-A-3 324 169) trägt zwar die Verwendung von Kunststoff als Material für den Schieber und den Halter dazu bei, günstige Fertigungskosten und ein geringes Gewicht zu erreichen. Wegen des sehr großen Bereiches, innerhalb dessen die Temperatur schwanken kann, welcher eine Sonnenblende ausgesetzt ist, wirken sich bei den bekannten Sonnenblenden die Wärmedehnungen und Wärmeschrumpfungen des Schiebers und des die Führungsschienen bildenden Halters so stark aus, daß die Kraft, die erforderlich ist, um den Schieber zu bewegen, erheblich schwankt, und zwar auch, wenn enge Toleranzen eingehalten werden. Selbst dann, wenn man die Abmessungen so festlegt, daß in der Mitte des Temperaturbereiches die vorgeschriebene Betätigungskraft für den Schieber erreicht wird, kann in den beiden Endbereichen der Fall eintreten, daß sich der Schieber bei Erschütterungen selbst verschiebt oder die erforderliche Bertätigungskraft viel zu hoch ist.

Der Erfindung liegt daher die Aufgabe zugrunde, eine Sonnenblende der eingangs genannten Art zu schaffen, bei welcher mit geringem Aufwand innerhalb des gesamten Temperaturbereiches eine annähernd gleichbleibende Kraft für das Verschieben des Schiebers sichergestellt ist. Diese Aufgabe wird gemäß einer ersten Lösung durch die Merkmale des Anspruches 1, gemäß einer zweiten Lösung durch die Merkmale des Anspruches 2 gelöst.

Bei der Lösung gemäß Anspruch 1 wird die Reibungskraft, welche zum Verschieben des Schiebers überwunden werden muß, mit Hilfe wenigstens einer an den Schieber angeformten, federnden Zunge aufgebracht, die durch ihren im Vergleich zu den auftretenden Wärmedehnungen großen Federweg in der Lage ist, im gesamten Temperaturbereich die Reibungskraft annähernd konstant zu halten. Außerdem kann diese Reibungskraft sehr gering gehalten werden, weil die Zunge wenigstens in einer Endstellung des Schiebers mit einer an der Führungsschiene vorgesehenen Raste kraftschlüssig zusammenwirkt und dadurch zuverlässig verhindert, daß sich der Schieber auch erheblichen Erschütterungen oder sonstigen äußeren Krafteinwirkungen ungewollt aus der Endstellung herausbewegt. Selbstverständlich wäre es auch möglich, die federnde Zunge an einer der Führungsschienen vorzusehen und an den Schieber die Raste anzuformen.

Bei der Lösung gemäß Anspruch 2 ist ebenfalls der Federweg der die Reibkraft bestimmenden Formfeder im Vergleich zu den auftretenden Wärmedehnungen so groß, daß die Reibungskraft im gesamten Temperaturbereich annähernd konstant bleibt. Verzichtet man bei einer solchen Formfeder auf eine Verrastung des Schiebers in einer oder beiden Endstellungen mit Hilfe dieser Formfeder, dann genügt beispielsweise eine leichte Wellenform, also eine sehr einfache Form, der Formfeder, weshalb auch diese Lösung sehr kostengünstig ist. Aber auch dann, wenn man die Formfeder als Rastelement ausbildet, ist der Aufwand nur unwesentlich größer.

Vorteilhafte Ausgestaltungen der Formfeder sind Gegenstand der Ansprüche 3 und 4.

Die an den Schieber angeformte, federnde Zunge ist vorteilhafterweise gemäß Anspruch 5 ausgebildet.

Bei einer Ausbildung gemäß Anspruch 6 läßt sich mit äußerst einfachen Mitteln erreichen, daß auch bei einer sehr geringen Reibungskraft eine hohe Rastkraft erreicht werden kann und dennoch die Zunge keine zu hohe Beanspruchung erfährt.

Damit der Schieber in beiden Endstellungen verrastbar ist, kann man die Führungsschiene mit je einer Raste für beide Endstellungen versehen und entweder die federnde Zunge mit diesen beiden Rasten zusammenwirken lassen, oder aber gemäß Anspruch 8 für die zweite Endstellung eine zweite federnde Zunge am Schieber vorsehen. Die letztgenannte Möglichkeit hat den Vorteil, daß beide Rasten außerhalb der Gleitbahn liegen können, welche die Führungsschiene für den Schieber bildet.

Die zweite federnde Zunge könnte zwar auch zur Erzeugung einer Reibungskraft herangezogen werden. Da in der Regel die erforderliche Reibungskraft von einer einzigen Zunge erzeugt werden kann, ist jedoch bei einer bevorzugten Ausführungsform die zweite federnde Zunge so ausgebildet, daß sie im entspannten Zustand nicht an der Führungsschiene anliegt und nur ausgelenkt wird, wenn sie mit der zugeordneten Raste zusammenwirkt.

Sofern erforderlich, kann der Schieber in der der Zunge oder den Zungen gegenüberliegenden Randzone wenigstens ein gemäß Anspruch 10 ausgebildetes federndes Glied aufweisen.

Eine besonders einfache und kostensparende Konstruktion erhält man bei einer Ausbildung der Führungsschienen gemäß Anspruch 11. Dabei ist es vorteilhaft, den Schieber auf seiner am Spiegel anliegenden Seite mit leistenartigen Erhöhungen gemäß Anspruch 12 zu versehen.

Im folgenden ist die Erfindung anhand von zwei in der Zeichnung dargestellten Ausführungsbeispielen im einzelnen erläutert. Es zeigen

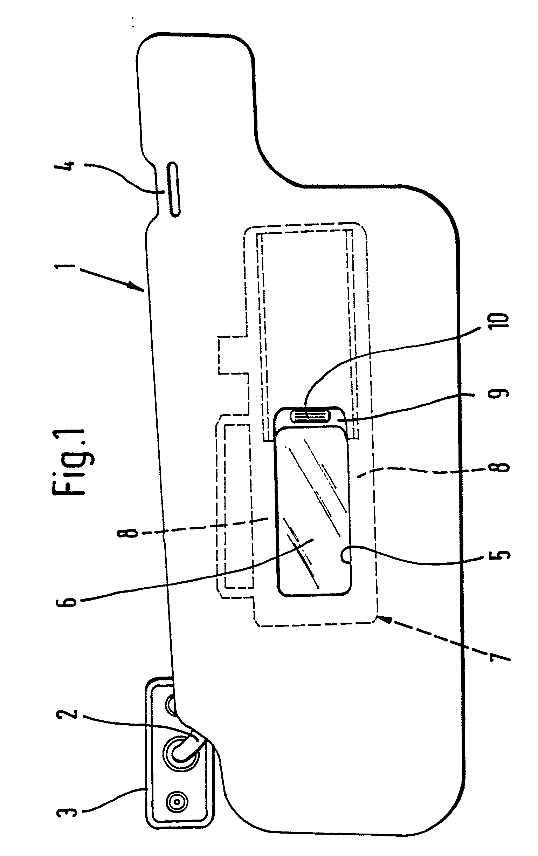

Fig. 1 eine Ansicht des ersten Ausführungsbeispiels,

Fig. 2 eine vergrößert dargestellte Ansicht des Schiebers des ersten Ausführungsbeispiels,

Fig. 3 und 4 je einen vergrößert dargestellten Ausschnitt der Fig. 2,

Fig. 5 eine Draufsicht auf die Rückseite des den Spiegel und den Schieber aufnehmenden Halters des ersten Ausführungsbeispiels,

Fig. 6 einen Schnitt nach Linie VI-VI in Fig. 5,

Fig. 7 eine Ansicht der Frontseite des Schiebers des zweiten Ausführungsbeispiels,

Fig. 8 eine Draufsicht auf den Schieber gemäß Fig. 7,

Fig. 9 eine Ansicht der Feder des Schiebers gemäß des zweiten Ausführungsbeispiels.

Eine Sonnenblende für ein Kraftfahrzeug weist einen gepolsterten Blendenkörper 1 auf, der um eine Schwenkachse 2 verschwenkbar ist, von der nur der eine Endabschnitt aus dem Blendenkörper 1 herausragt. Dieser Endabschnitt ist über ein Kugelgelenk mit einer Befestigungsplatte 3 verbunden. Der nicht dargestellte Polsterträger des Blendenkörpers 1 bildet in Verlängerung der Schwenkachse 2 einen Achsenabschnitt 4, der normalerweise in ein an der Karosserie befestigtes Lager eingeklipst ist, aus diesem aber herausgenommen werden kann, wenn der Blendenkörper 1 zum Seitenfenster hin geschwenkt werden soll.

In der in der Gebrauchsstellung der Sonnenblende dem Fahrzeuginsassen zugewandten Seite ist der Blendenkörper 1 mit einer Aussparung 5 versehen, die einen Spiegel 6 berandet, der in einem im Inneren des Blendenkörpers 1 angeordneten und mit dessen Polsterträger verbundenen Halter 7 festgelegt ist. Der aus Kunststoff bestehende und einstückig ausgebildete Kalter 7 bildet zwei parallel zur Schwenkachse 2 verlaufende, im Querschnitt U-förmige Führungsschienen 8, welche nicht nur den oberen und unteren Rand des Spiegels 6 aufnehmen, sondern auch der Führung eines aus Kunststoff bestehenden, ebenfalls einstückig ausgebildeten Schiebers 9 dienen, mittels dessen der Spiegel 6 wahlweise freigegeben oder abgedeckt werden kann. Für die hierfür erforderliche Verschiebung ist der Schieber auf der dem Spiegel 6 abgekehrten Seite mit einem wulstförmigen Griffteil 10 versehen.

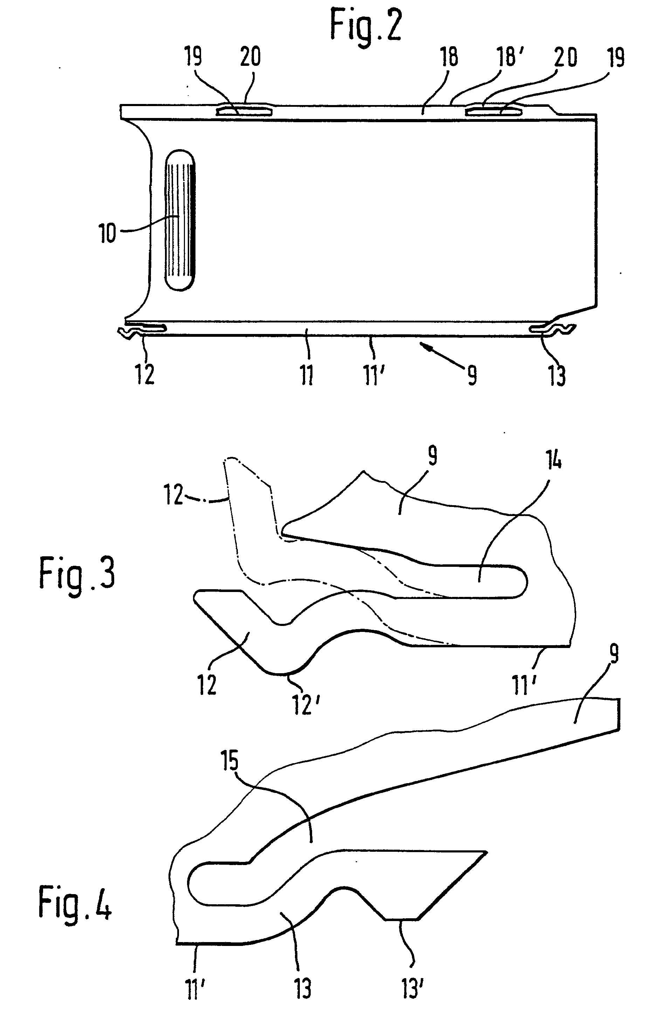

Wie Fig. 2 zeigt, sind an die beiden Enden der einen der beiden in Verschieberichtung verlaufenden Randzonen eine erste bzw. eine zweite federnde Zunge 12 bzw. 13 angeformt, die sich in Längsrichtung dieser Randzone 11 erstrecken, jedoch in entgegengesetzte Richtungen weisen. Beide federnde Zungen 12 und 13, die durch je einen Schlitz 14 bzw. 15 von der benachbarten Materialpartie des Schiebers 9 getrennt sind, bilden auf der diesem Schlitz abgekehrten Seite einen Rastvorsprung 12' bzw. 13'. Wie insbesondere die Fig. 3 und 4 zeigen, steht der Rastvorsprung 12' bei entspannter Zunge 12 über die eine Gleitfläche der Randzone 11 bildende schmale Längsseite 11' über, wohingegen der Rastvorsprung 13' sich nicht bis in die durch die schmale Längsseite 11' definierte Gleitfläche des Schiebers 9 hinein erstreckt. Daher beeinflußt nur die erste federnde Zunge 12 die zwischen dem Schieber 9 und den Führungsschienen 8 wirksame Reibungskraft, die so gewählt ist, daß die auf den Schieber 9 auszuübende Verstellkraft etwa 10 N beträgt. Dank des relativ großen Federweges, den die erste federnde Zunge 12 aufgrund des Schlitzes 14 zur Verfügung hat, und der relativ weichen Federcharakteristik ändert sich die für die Betätigung des Schiebers 9 aufzubringende Betätigungskraft im gesamten Temperaturbereich zwischen etwa minus 30° und plus 80° nicht merklich, obwohl die Temperaturdehnung des Schiebers 9 und des Halters 7 in diesem großen Temperaturbereich erheblich ist.

Die erste federnde Zunge 12 bildet zusammen mit einer an die die Randzone 11 aufnehmende Führungsschiene 8 angeformten Rasterhöhung 16 eine Rastvorrichtung, welche den Schieber 9 mit ausreichend hoher Rastkraft in der den Spiegel 6 vollständig abdeckenden Stellung hält. Um trotz der geringen Federkraft der ersten federnden Zunge 12 die erforderliche Rastkraft zu erreichen, ist, wie insbesondere Fig. 3 zeigt, der Schlitz 14 so gestaltet, daß die federnde Zunge 12 sich am Schieber 9 abstützt, wenn der Rastvorsprung 12' über die Rasterhöhung 16 hinwegbewegt wird.

Der zweiten federnden Zunge 13 ist eine zweite Rasterhöhung 17 zugeordnet, die an dieselbe Führungsschiene 8, welche mit der Rasterhöhunbg 16 versehen ist, angeformt ist, jedoch im Bereich von deren anderem Endabschnitt, damit die zweite federnde Zunge 13 und die zweite Rasterhöhung in kraftschlüssigem Eingriff sind, wenn der Schieber 9 den Spiegel vollständig freigibt.

Im Ausführungsbeispiel ist die andere Randzone 18, die der Randzone 11 gegenüberliegt, mit zwei in ihrer Längsrichtung verlaufenden, im Abstand voneinander angeordneten Schlitzen 19 versehen. Die die Schlitze nach außen begrenzenden beiden Materialpartien 20 sind elastisch in den Schlitzen 19 hinein deformierbar und stehen im undeformierten Zustand etwas über die schmale Längsseite 18' der Randzone 18 über. Die Materialpartien 20 bilden daher zwei elastisch nachgiebige Gleitelemente, durch welche noch besser als allein mit der ersten federnden Zunge 12 Wärmedehnungen kompensiert werden.

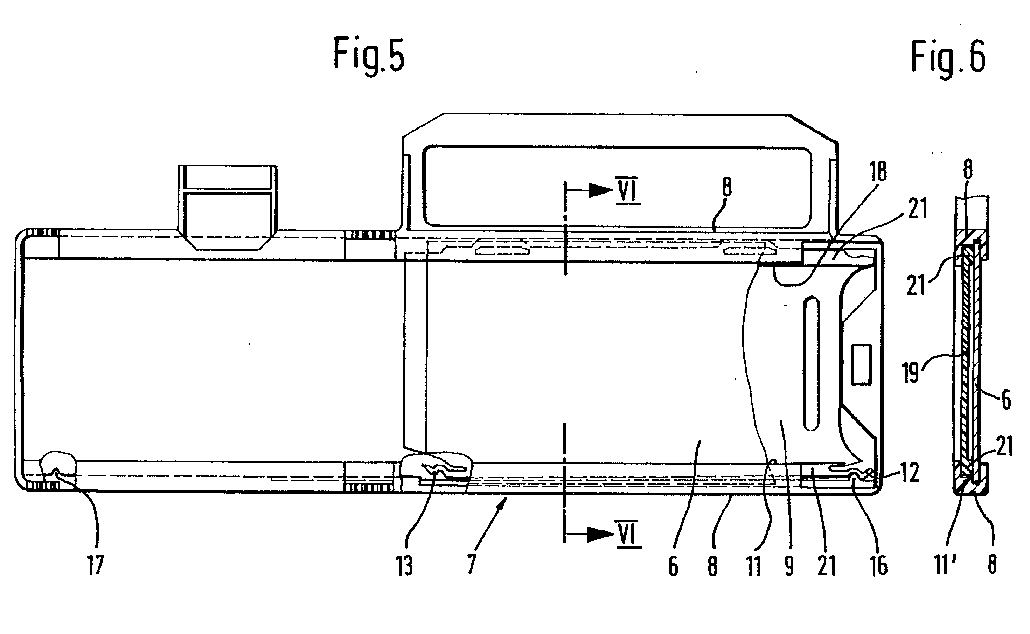

Wie insbesondere Fig. 6 zeigt, liegen der Spiegel 6 und der Schieber 9 in den beiden Führungsschienen 8 nebeneinander. Die Innenkontur der beiden Führungsschienen 8 ist an die unterschiedlich große Breite des Spiegels 6 und des Schiebers 9 angepaßt, wie Fig. 6 ebenfalls zeigt. Auf der dem Spiegel 6 zugekehrten Seite bilden die beiden Randzonen 11 und 18 des Schiebers 9 je eine vorspringende Leiste 21, mit der der Schieber 9 außerhalb des von der Aussparung 5 freigegebenen Bereiches auf der Vorderseite des Spiegels 6 aufliegt, wodurch die Reibung zwischen dem Spiegel 6 und dem Schieber 9 auf einem sehr geringen Wert gehalten wird.

Das zweite Ausführungsbeispiel unterscheidet sich von dem vorstehend beschriebenen ersten Ausführungsbeispiel nur durch eine abgewandelte Ausbildung seines Schiebers 109. Daher ist im folgenden das zweite Ausführungsbeispiel nur inwoweit beschrieben, als es sich vom ersten Ausführungsbeispiel unterscheidet.

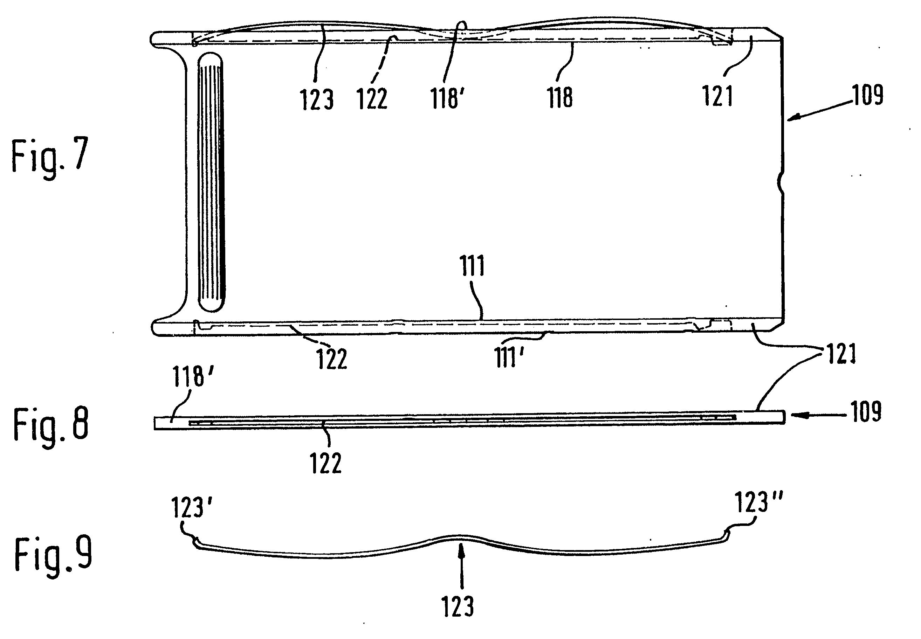

Die beiden Randzonen 111 und 118 des Schiebers 109 sind in dem durch die vorspringenden Leisten 121 verbreiterten Bereich je mit einer zu der zugehörigen schmalen Längsseite 111' bzw. 118' offenen Längsschlitz 122 versehen. Allerdings wäre es ausreichend, nur eine der beiden Randzonen in dieser Weise auszubilden. Die Längsschlitze 122 enden in relativ geringem Abstand von den beiden Enden der sie enthaltenden Randzone. Wie Fig. 7 zeigt, sind die Längsschlitze 122 an beiden Enden vertieft. Die Abmessung der einen Vertiefung in der Verschieberichtung des Schieber 109 ist an die Abmessung eines abgewinkelten Endabschnittes 123' einer aus einem Stahldraht hergestellten Formfeder 123 angepaßt, um diesen Endabschnitt 123' in der Bewegungsrichtung des Schiebers 109 unverschiebbar aufzunehmen.

Wie die Fig. 7 und 9 zeigen, bildet die Formfeder 23 zwei aus dem Längsschlitz 122 heraustretende, bogenförmige Abschnitte, die vom Schlitz aus gesehen konkav gekrümmt sind. Zwischen diesen beiden bogenförmigen Abschnitten ist ein vom Schlitz aus gesehen konvex gekrümmter Abschnitt stärkerer Krümmung vorgesehen, der sich auf dem Grund des Längsschlitzes 122 abstützt. Der andere Endabschnitt 123", der ebenfalls zum Schieber 109 hin abgewinkelt ist, ist längsverschiebbar in der ihn aufnehmenden Vertiefung geführt. Daher kann sich der Überstand der Formfeder 123 über die schmale Längsseite 118 des Schiebers 109 an die Erfordernisse anpassen, wobei wegen des großen Federweges der Formfeder die Reibungskraft im gesamten Temperaturbereich annähernd gleich ist. Sie ist jedoch auf einen etwas höheren Wert eingestellt als bei dem ersten Ausführungsbeispiel, wodurch auf eine Verrastung des Schiebers 109 in seinen beiden Endstellungen verzichtet werden kann.

**Ansprüche**

1. Sonnenblende für Kraftfahrzeuge mit einem Spiegel (6) und einem zu dessen Abdeckung vorgesehenen Schieber (9) aus Kunststoff, der im Bereich seiner beiden in der Verschieberichtung verlaufenden Randzonen (11, 18) in je einer Führungsschiene (8) eines aus Kunststoff bestehenden Halters (7) geführt ist, dadurch gekennzeichnet, daß an wenigstens einer der beiden Randzonen (11, 18) des Schiebers (9) wenigstens eine federnde Zunge (12) angeformt ist, welche mit Vorspannung an der diese Randzone (11) aufnehmenden Führungsschiene (8) anliegt sowie einen federnden Rastvorsprung (12') bildet, welcher zumindest in der einen Endstellung des Schiebers (9) mit einer an der Führungsschiene (8) vorgesehenen Raste (16) kraftschlüssig zusammenwirkt.

2. Sonnenblende für Kraftfahrzeuge mit einem Spiegel (6) und einem zu dessen Abdeckung vorgesehenen Schieber (109) aus Kunststoff, der im Bereich seiner beiden in der Verschieberichtung verlaufenden Randzonen (111, 118) in je einer Führungsschiene (8) eines aus Kunststoff bestehenden Halters (7) geführt ist, dadurch gekennzeichnet, daß der Schieber (109) in der durch seine Dicke bedingten Randfläche (111', 118') wenigstens einer seiner beiden sich in der Verschieberichtung erstreckenden Randzonen (111, 118) mit einem Längsschlitz (122) versehen ist, in dem Abschnitte einer Formfeder (123) angeordnet sind, die zumindest auf einem Teil ihrer Länge in der durch den Schieber (109) definierten Fläche im entspannten Zustand über die Randfläche (111', 118') übersteht.

3. Sonnenblende nach Anspruch 2, dadurch gekennzeichnet, daß die Formfeder (123) aus einem Stahldraht besteht, der auf halber Länge sowie an beiden Enden am Grund des Längsschlitzes (122) abgestützt ist.

4. Sonnenblende nach Anspruch 3, dadurch gekennzeichnet, daß die beiden Enden (123', 123") der Formfeder (123) abgewinkelt sind und in je eine Vertiefung im Grund des Längsschlitzes (122) eingreifen.

5. Sonnenblende nach Anspruch 1, dadurch gekennzeichnet, daß sich die federnde Zunge (12) in der Verschieberichtung des Schiebers (9) gegen das benachbarte Ende der Randzone (11) hin erstreckt und auf ihrer sich an die Führungsschiene (8) anliegenden Seite einen Rastvorsprung (12') aufweist.

6. Sonnenblende nach Anspruch 5, dadurch gekennzeichnet, daß die federnde Zunge (12) durch einen sich zumindest im wesentlichen in der Verschieberichtung erstreckenden Schlitz (14) von der benachbarten Werkstoffpartie des Schiebers (9) getrennt ist und daß die Weite dieses Schlitzes (14) in Höhe des an der Führungsschiene (8) anliegenden Endabschnitts der federnden Zunge (12) etwa gleich der Auslenkung der federnden Zunge (112) durch eine gegen den Schieber (9) vorspringende Materialpartie der Raste (16) gewählt ist.

7. Sonnenblende nach einem der Ansprüche 1 bis 5 oder 6, dadurch gekennzeichnet, daß die federnde Zunge (12) und die Raste (16) derjenigen Endstellung des Schiebers (9) zugeordnet sind, in welcher der Spiegel (6) abgedeckt ist.

8. Sonnenblende nach einem der Ansprüche 1, 5, 6 oder 7, dadurch gekennzeichnet, daß die an ihrem einen Ende die federnde Zunge (12) aufweisende Randzone (11) an ihrem anderen Ende mit einer zweiten angeformten, federnden Zunge (13) versehen ist, die sich in der Verschieberichtung des Schiebers (9) gegen das ihr benachbarte Schieberende hin erstreckt und in derjenigen Endstellung des Schiebers (9) in welcher dieser den Spiegel (6) freigibt, mit einer an der sie aufnehmenden Führungsschiene (8) vorgesehenen Raste (17) kraftschlüssig zusammenwirkt.

9. Sonnenblende nach Anspruch 8, dadurch gekennzeichnet, daß die an die Raste (17) anlegbare Seite der zweiten federnden Zunge (13) in deren entspanntem Zustand ohne Kontakt mit der von der Randzone gebildeten Gleitfläche ist.

10. Sonnenblende nach einem der Ansprüche 1 bis 9, dadurch gekennzeichnet, daß der Schieber (9) in seiner anderen Randzone (18) wenigstens einen in der Verschieberichtung verlaufenden Schlitz (19) aufweist und daß die den Schlitz nach außen begrenzende, schmale, gegen den Schieber (9) elastisch nachgiebige Materialpartie (20) über die durch die Dicke der Randzone (18) bedingte Randfläche (18') übersteht.

11. Sonnenblende nach einem der Ansprüche 1 bis 10, dadurch gekennzeichnet, daß beide Führungsschienen (8) ein im Querschnitt U-artiges Profil haben und ihr einer Schenkel eine Anlagefläche für den Schieber (9), der andere Schenkel eine Anlagefläche für den Spiegel (6) bildet, der seinerseits eine Anlagefläche für den Schieber (9) bildet.

12. Sonnenblende nach Anspruch 11, dadurch gekennzeichnet, daß der Schieber (9 ; 109) längs seiner beiden in die Führungsschienen eingreifenden Randzonen (11, 18 ; 111, 118) auf der dem Spiegel zugekehrten Seite je eine leistenartige Erhöhung (21) aufweist, an denen der Spiegel (6) anliegt.

## Claims

1. A sun visor for motor vehicles, with a mirror (6) and, intended to mask the latter, a synthetic plastics sliding member (9) which in the region of its two marginal zones (11, 18) which extend in the direction of displacement, is guided in a respective guide rail (8) of a synthetic plastics holder, characterised in that on at least one of the two marginal zones (11, 18) of the sliding member (9) there is at least one integrally moulded resilient tongue (12) which bears with initial tension on the guide rail (8) which accommodates this marginal zone (11), and forms a resilient projection (12') which, at least in one extreme position of the sliding member (9), cooperates operatively with a catch (16) provided on the guide rail (8).

2. A sun visor for motor vehicles, with a mirror (6) and, intended to mask the latter, a synthetic plastics sliding member (109) which in the region of its two marginal zones (111, 118) which extend in the direction of displacement, is guided in a respective guide rail (8) of a synthetic plastics holder (7), characterised in that in the marginal area (111', 118') caused by its thickness, on at least one of its two marginal zones (111, 118) which extend in the direction of displacement, the sliding member (109) is provided with a longitudinal slot (122) in which there are disposed portions of a shaped spring (123) which in the relaxed state extends beyond the marginal area (111', 118') at least on a part of its length in the area defined by the sliding member (109).

3. A sun visor according to Claim 2, characterised in that the shaped spring (123) consists of a steel wire which is braced at both ends and at half its length on the bottom of the longitudinal slot (122).

4. A sun visor according to Claim 3, characterised in that the two ends (123', 123") of the shaped spring (123) are angled over, each engaging a depression in the bottom of the longitudinal slot (122).

5. A sun visor according to Claim 1, characterised in that the resilient tongue (12) extends in the direction of displacement of the sliding member (9) towards the adjacent end of the marginal zone (11) and has a catch (12') projecting on its side which bears on the guide rail (8).

6. A sun visor according to Claim 5, characterised in that the resilient tongue (12) is separated from the adjacent part of the material of the sliding member (9) by a slot (14) which extends at least substantially in the direction of displacement and in that the width of the slot (14) at the height of the end portion of the resilient tongue (12) which bears on the guide rail (118) is chosen to be substantially equal to the deflection of the resilient tongue (112) by a part of the material of the catch (16) which projects towards the sliding member (9).

7. A sun visor according to one of Claims 1 to 5 or 6, characterised in that the resilient tongue (12) and the catch (16) are associated with that extreme position of the sliding member (9) in which the mirror (6) is masked.

8. A sun visor according to one of Claims 1, 5, 6 or 7, characterised in that the marginal zone (11) which has the resilient tongue (12) at one end is provided at its other end with a second integrally moulded resilient tongue (13) which extends in the direction of displacement of the sliding member (9) towards its adjacent end of the sliding member and in that extreme position of the sliding member (9) in which this latter exposes the mirror (6), cooperates operatively with a catch (17) provided on the guide rail (8) which accommodates it.

9. A sun visor according to Claim 8, characterised in that the side of the second resilient tongue (13) which can bear on the catch (17), when it is in its relaxed state, has no contact with the sliding surface formed by the marginal zone.

10. A sun visor according to one of Claims 1 to 9, characterised in that in its other marginal zone (18), the sliding member (9) has at least one slot (19) which extends in the direction of displacement and in that the narrow material part (20) which yields elastically towards the sliding member (9) and which outwardly defines the slot projects beyond the marginal surface (18') created by the thickness of the marginal zone (18).

11. A sun visor according to one of Claims 1 to 10, characterised in that both guide rails (8) have a cross-sectionally U-shaped profile, one arm thereof forming a surface on which the sliding member (9) can bear while the other arm forms a surface on which the mirror (6) can bear, the mirror in turn forming a surface on which the sliding member (9) can bear.

12. A sun visor according to Claim 11, characterised in that the sliding member (9, 109) has along its two marginal zones (11, 18 ; 111, 118) which engage the guide rails and on the side facing the mirror, respective strip-like raised portions (21) on which the mirror (6) bears.

## Revendications

1. Pare-soleil pour véhicules automobiles muni d'un miroir (6) et d'une plaque coulissante (9) en matière plastique, prévue pour masquer le miroir et qui est guidée, dans la région de chacune de ses deux zones de bord (17, 18) s'étendant selon la direction de la translation, dans une glissière (8) d'un support (7) en matière plastique, caractérisé en ce qu'au moins l'une des deux zones de bord (11, 18) de la plaque coulissante (9), est formée une languette élastique (12) qui est appuyée avec précontrainte contre la glissière (8) qui reçoit cette zone de bord (11) et forme une saillie élastique d'arrêt (12') qui coopère par action de force avec un arrêt (16) prévu sur la glissière au moins dans l'une des positions extrêmes de la plaque coulissante (9).

2. Pare-soleil pour véhicules muni d'un miroir (6) et d'une plaque coulissante (109) en matière plastique prévue pour masquer le miroir et qui est guidée dans la région de chacune de ses deux zones de bord (111, 118) s'étendant dans la direction de la translation, dans une glissière (8) d'un support (7) en matière plastique, caractérisé en ce que la plaque coulissante (109) est munie, dans la surface de bord en épaisseur (111', 118') d'au moins une de ses deux zones de bord (111, 118) s'étendant selon la direction de la translation, d'une fente longitudinale (122), dans laquelle sont disposés des segments d'un ressort en forme (123) qui, dans l'état détendu, fait saillie au-delà de la surface de bord (111', 118') au moins sur une partie de sa longueur, dans la surface définie par la plaque coulissante (109).

3. Pare-soleil selon la revendication 2, caractérisé en ce que le ressort en forme (123) est fait d'un fil d'acier qui prend appui sur le fond de la fente longitudinale (122) à la moitié de sa longueur ainsi qu'aux deux extrémités.

4. Pare-soleil selon la revendication 3, caractérisé en ce que les deux extrémités (123', 123") du ressort en forme (123) sont coudées et s'engagent chacune dans un renfoncement du fond de la fente longitudinale (122).

5. Pare-soleil selon la revendication 1, caractérisé en ce que la languette élastique (12) s'étend selon la direction de la translation de la plaque coulissante (9), vers l'extrémité adjacente de la zone de bord (11), et présente une saillie d'arrêt (12') sur son côté qui est en appui contre la glissière (8).

6. Pare-soleil selon la revendication 5, caractérisé en ce que la languette élastique (12) est séparée de la partie de matière adjacente de la plaque coulissante (9) par une fente (14) qui s'étend au moins sensiblement selon la direction de la translation, et en ce que la largeur de cette fente (14) au droit du segment d'extrémité de la languette élastique (12) qui est adjacent à la glissière (8), est choisie à peu près égale à la déviation que la languette élastique (112) subit sous l'action d'une partie de matière de l'arrêt (16) qui fait saillie vers la plaque coulissante (9).

7. Pare-soleil selon une des revendications 1 à 5 ou 6, caractérisé en ce que la languette élastique (12) et l'arrêt (16) sont associés à la position extrême de la plaque coulissante (9) dans laquelle le miroir (6) est masqué.

8. Pare-soleil selon une des revendications 1, 5, 6 ou 7, caractérisé en ce que la zone de bord (11) qui présente la languette élastique (12) à l'une de ses extrémités est munie à son autre extrémité d'une deuxième languette élastique (13) venue de moulage qui s'étend selon la direction de la translation de la plaque coulissante (9), vers l'extrémité de la plaque coulissante qui lui est adjacente et, dans la position extrême de la plaque coulissante (9) dans laquelle cette plaque coulissante démasque le miroir (6), coopère par action de force avec un arrêt (17) prévu sur la glissière (8) qui la reçoit.

9. Pare-soleil selon la revendication 8, caractérisé en ce que, dans l'état détendu, le côté de la deuxième languette élastique (13) qui peut être appliqué contre l'arrêt (17) est hors de contact avec la surface de glissement formée par la zone de bord.

10. Pare-soleil selon une des revendications 1 à 9, caractérisé en ce que, dans son autre zone de bord (18), la plaque coulissante présente au moins une fente (19) s'étendant selon la direction de la translation et en ce que la partie étroite de matière (20), qui limite la fente vers l'extérieur et qui peut céder élastiquement en se dirigeant vers la plaque coulissante (9) fait saillie au-delà de la surface de bord en épaisseur (18') de la zone de bord (18).

11. Pare-soleil selon une des revendications 1 à 10, caractérisé en ce que les deux glissières (8) ont en section transversale un profil en U et que l'une de leurs branches forme une surface d'appui pour la plaque coulissante (9), l'autre branche forme une surface d'appui pour le miroir (6) qui, de son côté, forme une surface d'appui pour la plaque coulissante (9).

12. Pare-soleil selon la reveridication 11, caractérisé en ce que la plaque coulissante (9 ; 109) présente, le long de chacune de ses deux zones de bord (11, 18 ; 111, 118) qui sont engagées dans les glissières, sur le côté dirigé vers le miroir, une surélévaticn (21) en forme de réglette contre laquelle le miroir (6) s'appuie.

Fig.1

# Fig.2

# Fig.3

# Fig.4

# Fig.5

# Fig.6

EP 0 331 779 B1

VI

VI

18

21

21

8

21

19

6

21

12

17

13

7

6 8 11 9 21 16

11'

8

EP 0 331 779 B1

Fig. 7

123    122    118'    118    121    109

111

122    111'    121

118'    109

122

Fig. 8

123'    123"

Fig. 9

123